# EUROPÄISCHE PATENTSCHRIFT

(11) **EP 3 279 918 B1**
(45) Veröffentlichungstag und Bekanntmachung des Hinweises auf die Patenterteilung: **02.08.2023**
(21) Anmeldenummer: 17178392.1
(22) Anmeldetag: 28.06.2017
(51) Int. Cl.: H01H 83/04, H02H 3/33

(54) **FEHLERSTROMSCHUTZSCHALTER**
RESIDUAL CURRENT PROTECTION SWITCH
DISJONCTEUR DIFFÉRENTIEL

(30) Priorität: 28.07.2016 DE 102016213875
(43) Veröffentlichungstag der Anmeldung: 07.02.2018
(73) Patentinhaber: Siemens Aktiengesellschaft, 80333 München (DE)
(72) Erfinder: Adlhoch, Manfred, 93170 Bernhardswald (DE)
(74) Vertreter: Siemens Patent Attorneys

(56) Entgegenhaltungen:
- DE-A1-102005 008 431
- DE-A1-102013 111 873
- DE-A1-102013 207 141
- JP-A- 2004 227 898
- US-A1- 2012 119 918
- Stengl J.-P., Tihanyi, Jenö: "Leistungs-MOS-FET-Praxis", 31. Dezember 1992 (1992-12-31), Richard Pflaum Verlag KG, München, XP002776654, ISBN: 3-7905-0619-2 * Seite 214 - Seite 215; Abbildung 8.31.6 *

## Beschreibung

Die Erfindung betrifft einen Fehlerstromschutzschalter nach dem Oberbegriff von Patentanspruch 1.

Fehlerstromschutzschalter, kurz FI-Schalter, sind allgemein bekannt. Üblicherweise werden hier so genannte Summenstromwandler verwendet. Dabei sind zwei oder mehr Leiter, meist Hin- und Rückleiter bzw. Außen- und Neutralleiter in einem Einphasen-Wechselstromnetz oder alle drei Außenleiter und der Neutralleiter bei einem Dreiphasenwechselstromnetz, durch einen Summenstromwandler geführt. Gewandelt wird dann nur der Differenzstrom, d.h. ein von Hin- und Rückstrom abweichender Strom, aus den Leitern. Üblicherweise ist die Stromsumme bzw. der Differenzstrom in einem elektrischen Stromkreis gleich null. Ist diese ungleich Null, kommen diese durch Fehlerströme zustande, die so erkannt werden können. Überschreiten diese einen Differenzstromgrenzwert, kann eine Unterbrechung des elektrischen Stromkreises erfolgen.

Fehlerstromschutzschalter werden insbesondere für Niederspannungsstromkreise respektive Niederspannungsnetze verwendet. Mit Niederspannung sind Spannungen bis 1000 Volt Wechselspannung oder 1500 Volt Gleichspannung gemeint.

Ein Fehlerstromschutzschalter besteht im Wesentlichen aus den Funktionsgruppen Summenstromwandler, Auslösekreis, Schaltschloss mit Kontakten, sowie einem Prüfstromkreis mit Prüftaste und Prüfwiderstand. Die Funktionsfähigkeit des Fehlerstromschutzschalters bzw. der Fehlerstrom-Schutzeinrichtung lässt sich über die Prüftaste kontrollieren. Beim Drücken der Prüftaste wird ein künstlicher Fehlerstrom erzeugt, bei dem die Fehlerstrom-Schutzeinrichtung auslösen muss. Um den Schutz vor gefährlichen Körperströmen sicherzustellen, muss bei Inbetriebnahme der Anlage und in regelmäßigen Abständen (i.d.R. halbjährlich) die Funktionsfähigkeit des Fehlerstromschutzschalters überprüft werden.

In der Regel sind Fehlerstromschutzschalter netzspannungsunabhängig aufgebaut, also unabhängig von der Primärleiterspannung des verwendeten bzw. zu schützenden Energie- bzw. Stromnetzes .

Nach der Produktnorm DIN EN 61008 gilt für FI-Schutzschalter mit einem Bemessungsfehlerstrom vom 30mA: Der maximale Prüfstrom darf das 1,66-fache des Bemessungsfehlerstromes nicht überschreiten, 1,66 x 30mA = 50mA.

Der maximal zulässige Auslösestrom, kurz AC, respektive Bemessungsfehlerstrom eines gealterten FI-Schutzschalters darf 1,25 x 30mA = 37,5mA nicht überschreiten.

Der durch den Prüfwiderstand erzeugte Prüfstrom bei Drücken der Prüftaste muss sich somit bei Geräten für Personenschutz, d.h. z.B. bei Bemessungsfehlerströmen von Idn = 30mA, zwischen diesen beiden Grenzwerten befinden.

Die Berechnung erfolgt an Hand des ohmschen Gesetztes, wonach sich der Widerstand R aus dem Quotienten von Spannung U als Dividend und Strom I als Divisor ergibt, R=U/I.

Daraus ergibt sich eine Abhängigkeit des Prüfwiderstandes R von der verwendeten Spannung (Bemessungsspannung bzw. Betriebsspannungsbereich) im Stromkreis. Dadurch sind für verschiedene Netzspannungsbereiche verschiedene Fehlerstromschutzschalter erforderlich. Diese unterscheiden sich durch die für die verwendete Netzspannung eingesetzten Prüfwiderstände.

In der deutschen Offenlegungsschrift DE 10 2013 111 873 A1 wird eine elektronische Auslöseeinrichtung beschrieben, die einen Teststromgenerator und einen Fehlerstromdetektionsschaltkreis enthält. Der Teststromgenerator ist mit einem Leiter verbunden und dazu eingerichtet, auf eine Auswahl des Tests der elektronischen Auslöseeinrichtung hin einen Teststrom mit einer Stromstärke in den Leiter einzuspeisen. Der Leiter beinhaltet einen Stromleiter oder einen Nullleiter. Der Fehlerstromdetektionsschaltkreis ist dazu eingerichtet, eine Stromstärkedifferenz zwischen dem Nullleiter und dem Stromleiter zu erfassen. Der Fehlerstromdetektionsschaltkreis ist dazu eingerichtet, auf die Auswahl des Tests der elektronischen Auslöseeinrichtung hin eine nicht auslösende Fehlermeldung auszugeben, falls die erfasste Stromstärkedifferenz kleiner ist als ein erster Schwellenwert.

In der deutschen Offenlegungsschrift DE 10 2005 008 431 A1 wird ein Fehlerstrom-Schutzschalter offenbart. Der Fehlerstrom-Schutzschalter gemäß der Erfindung beinhaltet: eine Erdschluss-Erfassungsschaltung einschließlich eines Nullphasen-Stromwandlers, einer Prüfwicklung und einer Erdschluss-Erfassungswicklung; eine Stromversorgungsschaltung, welche der Erdschluss-Erfassungsschaltung elektrischen Strom zuführt, wobei die Stromversorgungsschaltung aus einer Gleichstromversorgungsschaltung gebildet ist, die aus allen Wechselspannungsphasen des Hauptstromkreises eine vorbestimmte Gleichspannung erzeugt; eine Testsignalerzeugungsschaltung, welche, reagierend auf die von der Gleichstromversorgungsschaltung zugeführte Gleichspannung, ein Erdschlussprüf-Stromsignal erzeugt und das Erdschlussprüf-Stromsignal der Prüfwicklung oder der Erdschluss-Erfassungswicklung des Nullphasen-Stromwandlers zuführt; und einen ersten Prüfschalter, der bei einer Erdschlussprüfung angeschaltet wird, um den Ausgang der Gleichstromversorgungsschaltung mit der Testsignalerzeugungsschaltung zu verbinden.

In der japanischen Patentanmeldung mit der Publikationsnummer 2004227898 vom 12-08-04 wird als zu lösendes Problem angegeben, einen zuverlässigen Erdfehlerstrom-Unterbrecher bereitzustellen, der klein ist, wenig kostet und keinen großen Widerstand aufweist.

In der deutschen Offenlegungsschrift DE 10 2013 207 141 A1 wird eine allstromsensitive Fehlerstrom-Schutzeinrichtung mit Parameterkonfiguration beschrieben. Diese Anmeldung betrifft eine Fehlerstrom-Schutzeinrichtung (RCD) und ein Verfahren zur allstromsensitiven Differenzstrommessung mit einer spannungsabhängigen Funktionseinheit, die eine allstromsensitive Differenzstrommesseinrichtung, bestehend aus einem Stromsensor und einem allstromsensitiven Stromerfassungsmodul, sowie einen Mikrocontroller zur Konfiguration der spannungsabhängigen Funktionseinheit und zur Auswertung des von der allstromsensitiven Differenzstrommesseinrichtung erfassten Differenzstroms aufweist.

Aufgabe der vorliegenden Erfindung ist es, einen Fehlerstromschutzschalter zu verbessern, insbesondere ihn für einen grö-βeren Spannungsbereich einsetzbar zu machen.

Diese Aufgabe wird durch einen Fehlerstromschutzschalter mit den Merkmalen des Patentanspruchs 1 gelöst.

Erfindungsgemäß ist vorgesehen, dass ein Fehlerstromschutzschalter im Prüfstromkreis eine Stromquelle enthält. Dies hat den besonderen Vorteil, dass ein von der Spannung unabhängiger Prüfstromkreis zur Verfügung steht, da immer ein korrekter Prüfstrom erzeugt wird, wodurch ein größerer Einsatzbereich für Fehlerstromschutzschalter ermöglicht wird.

Vorteilhafte Ausgestaltungen der Erfindung sind in den Unteransprüchen angegeben.

Erfindungsgemäß weist die Stromquelle eine Serienschaltung zweier Transistoren auf. Dies hat den besonderen Vorteil, dass eine besonders einfache Realisierung einer Stromquelle für einen FI-Schutzschalter gegeben ist.

In einer vorteilhaften Ausgestaltung der Erfindung sind die Transistoren zwei Feldeffekttransistoren vom Typ Verarmung, insbesondere MOSFET.

Dies hat den besonderen Vorteil, dass eine besonders simple Realisierung einer Stromquelle für einen FI-Schutzschalter gegeben ist.

Erfindungsgemäβ sind die Source-Anschlüsse der beiden Transistoren über einen zweiten bzw. Source-Widerstand miteinander verbunden.

Dies hat den besonderen Vorteil, dass nur ein Widerstand für beiden Transistoren verwendet wird und somit eine Einsparung an Bauelementen erzielt wird.

Erfindungsgemäβ ist der Gate-Anschluss des ersten Transistors mit dem Source-Anschluss des zweiten Transistors verbunden und der Gate-Anschluss des zweiten Transistors mit dem Source-Anschluss des ersten Transistors verbunden.

Dies hat den besonderen Vorteil, dass eine für Wechselstrom komplementäre Realisierung gegeben ist, wodurch je nach Halbwelle des Wechselstroms einer der beiden Transistoren stromführend bzw. strombegrenzend ist.

Erfindungsgemäβ ist der Drain-Anschluss des ersten oder zweiten Transistors mit einem ersten Anschluss eines ersten bzw. Vorwiderstandes verbunden. Dies hat den besonderen Vorteil, dass eine individuelle Anpassung des Prüfstromes durch den Vorwiderstand gegeben ist, unabhängig von den verwendeten Transistoren.

In einer vorteilhaften Ausgestaltung der Erfindung bilden der zweite Anschluss des ersten Widerstandes und der Drain-Anschluss des nicht mit dem ersten Widerstand verbundenen Transistors die Anschlüsse der Stromquelle.

Dies hat den besonderen Vorteil, dass die Stromquelle als Zweipol ausgeführt ist und somit ein Prüfwiderstand durch einfachen Austausch gegen eine erfindungsgemäße Stromquelle ersetzt werden kann.

In einer vorteilhaften Ausgestaltung der Erfindung ist der elektrische Stromkreis ein mehrphasiger Stromkreis und der Prüfstromkreis einerseits mit einem der eingangsseitigen Leiter und andererseits mit einem anderen der ausgangsseitigen Leiter des Summenstromwandlers (SW) verbunden.

Dies hat den besonderen Vorteil, dass der Fehlerstromschutzschalter, insbesondere ein mehrphasiger, für eine Vielzahl unterschiedlicher Stromkreise verwendbar ist. So kann immer sichergestellt werden, dass der Prüfstromkreis zwischen zwei stromführenden Leitern geschaltet ist und seine erfindungsgemäße Wirkung entfalten kann.

In einer vorteilhaften Ausgestaltung der Erfindung ist die Verbindung des Prüfstromkreises zu einem der eingangsseitigen Leiter oder einem der ausgangsseitigen Leiter des Summenstromwandlers (SW) umschaltbar ausgeführt.

Dies hat den besonderen Vorteil, dass am oder im Fehlerstromschutzschalter eine einfache Möglichkeit zu Auswahl der stromführenden Leiter gegeben ist, was den Inbetriebnahmeaufwand senkt.

Alle Ausgestaltungen, sowohl in abhängiger Form rückbezogen auf den Patentanspruch 1, als auch rückbezogen lediglich auf einzelne Merkmale oder Merkmalskombinationen von Patentansprüchen, bewirken eine Verbesserung eines Fehlerstromschutzschalters.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, die im Zusammenhang mit der Zeichnung näher erläutert werden.

Dabei zeigt die Zeichnung:
Figur 1 eine erste Prinzip-Darstellung eines Fehlerstromschutzschalters
Figur 2 eine zweite Prinzip-Darstellung eines Fehlerstromschutzschalters
Figur 3 eine erfindungsgemäße Stromquelle
Figur 4 eine Darstellung eines Spannungs-/Stromverlaufes über der Zeit

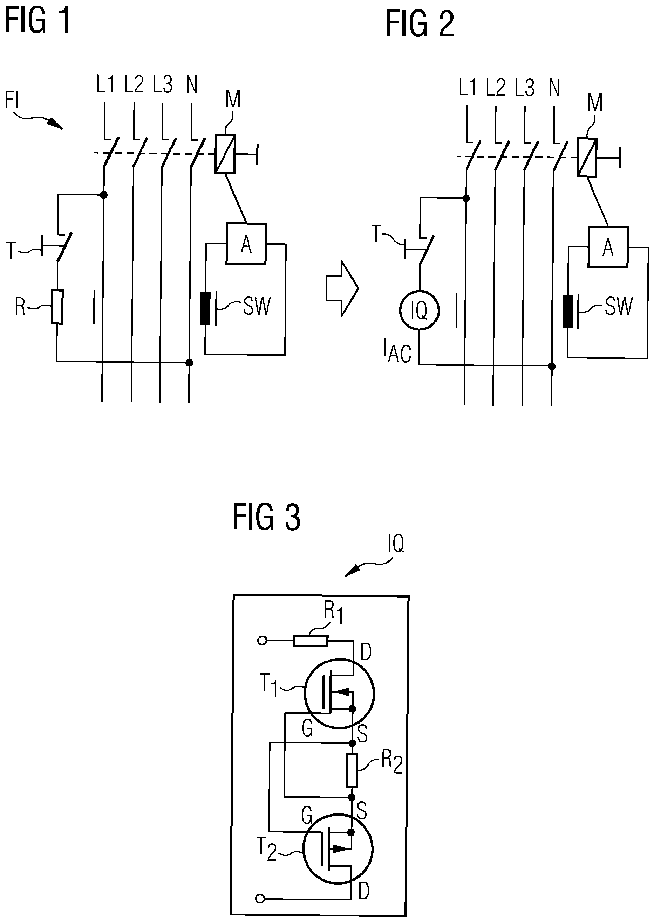

Figur 1 zeigt eine Prinzip-Darstellung eines netzspannungsunabhängigen Fehlerstromschutzschalters FI mit vier elektrischen Leitern L1, L2, L3, N eines elektrischen Stromkreises, der durch den Fehlerstromschutzschalter FI hindurchgeführt ist bzw. abgesichert ist.

Der Stromkreis ist durch Kontakte eines Schaltschlosses M unterbrechbar, insbesondere die Leiter L1, L2, L3, N werden durch die Kontakte unterbrochen. Das Schaltschloss M ist mit einem Auslösekreis A verbunden, der wiederum mit einem Summenstromwandler SW verbunden ist, der die Stromsumme bzw. den Differenzstrom des elektrischen Stromkreises, im Beispiel aufweisend die Leiter L1, L2, L3, N, ermittelt.

Der Auslösekreis A, der Summenstromwandler SW und das Schaltschloss SW sind derart ausgestaltet, dass bei Überschreitung eines Differenzstromgrenzwertes, der beispielsweise einstellbar ausgeführt sein kann, der elektrische Stromkreis unterbrochen wird.

Der Fehlerstromschutzschalter FI weist einen Prüfstromkreis mit einer Prüftaste T auf, zur Prüfung seiner Funktionsfähigkeit. Der Prüfstromkreis ist beispielsweise derart ausgestaltet, dass ein künstlicher Fehlerstrom erzeugt wird. Beispielsweise wird eine Verbindung zwischen zwei Leitern hergestellt, wobei z.B. die Verbindung einerseits mit einem Leiter vor dem Summenstromwandler SW und andererseits mit einem anderen Leiter nach dem Summenstromwandler SW hergestellt wird, wie in Figur 1 dargestellt.

Die Verbindung bzw. dieser Prüfstromkreis weist eine Serienschaltung der Prüftaste T und eines Widerstandes R auf. Der Widerstand R dient zur Strombegrenzung im Prüfstromkreis.

Wie eingangs dargestellt, muss der Widerstand R in Abhängigkeit der verwendeten Spannung im Stromkreis und dem eingestellten Differenzstromgrenzwert dimensioniert werden, um eine ordnungsgemäße Prüfung des Fehlerstromschutzschalters mittels der Prüftaste T durch den Prüfstromkreis zu erreichen.

Figur 2 zeigt eine Darstellung gemäß Figur 1, mit dem Unterschied, dass erfindungsgemäß der Widerstand R im Prüfstromkreis durch eine Stromquelle IQ ersetzt ist.

Durch die Stromquelle IQ kann eine von der Spannung im Stromkreis unabhängige bzw. für einen weiten Spannungsbereich ordnungsgemäße Prüfung des Fehlerstromschutzschalters FI erfolgen.

Bei einem mehrphasiger Stromkreis, d.h. wenn der elektrische Stromkreis ein mehrphasiger Stromkreis ist, kann der Fehlerstromschutzschalter derart ausgestaltet sein, dass der Prüfstromkreis einerseits mit einem der eingangsseitigen Leiter und andererseits mit einem anderen der ausgangsseitigen Leiter des Summenstromwandlers (SW) verbunden ist bzw. verbindbar ist. Dies kann beispielsweise umschaltbar ausgeführt sein. So dass der Prüfstromkreis wahlweise zwischen beliebigen Leiterkombinationen des elektrischen Stromkreises schaltbar ist. So kann der Prüfstromkreis zwischen den Leitern L1-L2, L1-L3, L2-L3, L1-N, L2-N oder L3-N schaltbar bzw. verbindbar sein, so dass vielfältige Anwendungsfälle abgedeckt werden können. Die Umschaltung kann beispielsweise mit Schiebe- oder Drehschaltern erfolgen.

Figur 3 zeigt eine Darstellung einer Schaltung einer Stromquelle IQ. Diese ist als Zweipol ausgeführt. Sie weist eine Serienschaltung zweier Transistoren T1, T2 auf. Die Transistoren sind beispielsweise Feldeffekttransistoren, wie z.B. Metall-Oxid-Halbleiter-Feldeffekttransistoren, kurz MOSFET bzw. MOS-FET. Beispielsweise sind sie vom Typ Verarmung, d.h. selbstleitend. Beispielsweise ist der erste Transistor T1 ein n-Kanal Verarmungstyp. Beispielsweise ist der zweite Transistor T2 ein p-Kanal Verarmungstyp.

Gemäß Figur 3 bildet beispielsweise der Drain-Anschluss D des ersten Transistors T1 einen ersten Anschluss der Stromquelle IQ. Der Drain-Anschluss D des zweiten Transistors T2 bildet den zweiten Anschluss der Stromquelle IQ. Die Source-Anschlüsse S der beiden Transistoren T1, T2 sind miteinander verbunden. In der Verbindung zwischen den beiden Source-Anschlüssen S ist ein zweiter Widerstand R2 bzw. Source-Widerstand eingefügt. Ferner ist am Drain-Anschluss D des ersten oder zweiten Transistors T1, T2 ein erster Widerstand R1 zur Strombegrenzung eingefügt.

Der erste Widerstand R1 bzw. Vorwiderstand kann auch in zwei Teilwiderstände aufgeteilt sein, wobei sich ein erster Teilwiderstand am Drain-Anschluss D des ersten Transistor T1 und der zweite Teilwiderstand am Drain-Anschluss D des zweiten Transistor T2 im Pfad zu den jeweiligen Anschlusspolen der Stromquelle IQ eingefügt sein kann.

Der Gate-Anschluss G des ersten Transistors T1 ist mit dem Source-Anschluss S des zweiten Transistors T2 verbunden. Der Gate-Anschluss G des zweiten Transistors T2 ist mit dem Source-Anschluss S des ersten Transistors T1 verbunden.

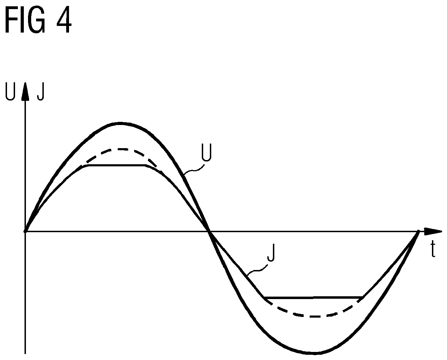

In Figur 4 ist eine Darstellung eines Spannungs- und Stromverlaufes über der Zeit t gezeigt. Hierbei ist ein sinusförmiger Verlauf der Spannung U und des Stromes I (gestrichelte Linie) dargestellt. Erfindungsgemäß wird der Strom I durch die Stromquelle IQ begrenzt bzw. auf einen gewünschten Prüfstromwert beschränkt, was durch die durchgezogene Linie des Stromverlaufes I dargestellt ist.

Im Folgenden wird die Erfindung mit anderen Worten beschrieben.

Es erfolgt erfindungsgemäß ein Ersatz eines Prüfwiderstands R durch eine (Wechsel-)Stromquelle IQ zur Generierung eines Prüf-(Wechsel-)Stromes. Dies kann erfindungsgemäß unabhängig von der Spannung des Stromkreises bzw. der Leiter L1, L2, L3, N erfolgen.

Die (Wechsel-)Stromquelle ist als Zweipol ausgeführt und gibt eine konstanten Strom bzw. konstanten Wechselstrom ab. Sie kann einen ersten Widerstand R1 bzw. Vorwiderstand R1 enthalten, welcher zur allgemeinen Strombegrenzung dient. Des Weiteren kann die Schaltung zwei komplementäre MOSFET's vom Typ Verarmung (depletion) enthalten, welche einen gemeinsamen zweiten bzw. Source-Widerstand R2 benutzen, bzw. bei denen die Source-Anschlüsse über einen zweiten (Source-)Widerstand R2 verbunden sind. Der erste Transistor T1 kann für die positive Halbwelle der Wechselspannung zuständig sein, der zweite Transistor T2 für die negative Halbwelle.

Wird die Prüftaste T gedrückt, so stellt sich der Strom anhand des ersten und zweiten Widerstandes R1, R2 ein. Die ersten und zweiten Transistoren T1, T2 sind als Verarmungstyp leitend, solange am Gate-Anschluss keine Spannung anliegt.

Durch den Stromfluss durch den zweiten Widerstand R2 entsteht ein Spannungsabfall am zweiten Widerstand R2, welcher je nach Halbwelle einen der beiden Transistoren ab einer bestimmen Gate-Source-Spannung sperrt. Somit wird der Stromfluss durch den Widerstand R2 und damit durch die Stromquelle bzw. den gesamten Zweipol beschränkt. Dies geschieht wechselseitig je nach positiver oder negativer Sinushalbwelle der Wechselspannung durch den ersten oder zweiten Transistor T1, T2.

Durch entsprechende Dimensionierung der Werte der Transistoren T1, T2 und Widerstände R1, R2 kann der maximale Strombereich der Stromquelle IQ genau eingestellt werden, wie in Figur 4 angedeutet.

Erfindungsgemäß wird ein Prüfwiderstand durch eine Stromquelle, beispielsweise eine Wechselstromquelle, ersetzt.

Es ergeben sich folgende Vorteile:
- Erweiterung des möglichen Spannungsbereichs eines Fehlerstromschutzschalters, insbesondere nach Produktnorm.
- Dadurch weniger Gerätevarianten erforderlich.
- Sichere Begrenzung des Stromes.
- Vermeidung von Überlast bei Spannungsspitzen oder Spannungsanstieg.
- Einfacher Aufbau einer Stromquelle
- Prüfstromkreis wird netzspannungsunabhängig, analog zum Auslösekreis.
- Einfache Dimensionierung der Stromgrenzen durch die beiden Widerstände und Transistoren.
- Platzsparende und kostengünstiger Aufbau im Vergleich zu beispielsweise aufwändigen Regelkreisen.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann, im Rahmen des in den Ansprüchen definierten Schutzumfangs, hieraus abgeleitet werden, ohne den Schutzumfang der Erfindung zu verlassen.

## Patentansprüche

1. Fehlerstromschutzschalter (FI) für einen elektrischen Stromkreis, aufweisend
einen Summenstromwandler (SW) zur Ermittlung eines Differenzstromes des elektrischen Stromkreises,
ein Schaltschloss (M) mit Kontakten zur Unterbrechung des elektrischen Stromkreises,
einen Auslösekreis (A), der mit dem Summenstromwandler (SW) und dem Schaltschloss (M) verbunden ist und derart ausgestaltet ist, dass bei Überschreitung eines Differenzstromgrenzwertes das Schaltschloss (M) aktiviert wird, so dass der elektrische Stromkreis unterbrochen wird,
einen Prüfstromkreis mit Prüftaste (T) zur Prüfung der Funktionsfähigkeit des Fehlerstromschutzschalters (FI),
wobei der Prüfstromkreis eine Stromquelle (IQ) aufweist,
wobei der Prüfstromkreis eine Serienschaltung der Prüftaste (T) und der Stromquelle (IQ) aufweist, die einerseits mit einem eingangsseitigen Leiter vor dem Summenstromwandler (SW) und andererseits mit einem anderen ausgangsseitigen Leiter nach dem Summenstromwandler (SW) verbunden ist, und
wobei die Stromquelle (IQ) ein Zweipol ist, **dadurch gekennzeichnet, dass** die Stromquelle (IQ) eine Serienschaltung zweier Transistoren (T1, T2) aufweist,
wobei der Drain-Anschluss (D) des ersten oder zweiten Transistors (T1, T2) mit einem ersten Anschluss eines ersten Widerstandes (R1) verbunden ist, und
dass die Source-Anschlüsse (S) der beiden Transistoren (T1, T2) über einen zweiten Widerstand (R2) miteinander verbunden sind, wobei der Gate-Anschluss (G) des ersten Transistors (Tl) mit dem Source-Anschluss (S) des zweiten Transistors (T2) verbunden ist und der Gate-Anschluss (G) des zweiten Transistors (T2) mit dem Source-Anschluss (S) des ersten Transistors (Tl) verbunden ist.

2. Fehlerstromschutzschalter (FI) nach Patentanspruch 1,
**dadurch gekennzeichnet,**
**dass** beim Drücken der Prüftaste (T) ein künstlicher Fehlerstrom erzeugt wird, bei dem der Fehlerstromschutzschalter auslösen muss.

3. Fehlerstromschutzschalter (FI) nach einem der vorhergehenden Patentansprüche,
**dadurch gekennzeichnet,**
**dass** die Transistoren zwei Feldeffekttransistoren (T1, T2) vom Typ Verarmung sind.

4. Fehlerstromschutzschalter (FI) nach Patentanspruch 3,
**dadurch gekennzeichnet,**
**dass** die Transistoren zwei Metall-Oxid-Halbleiter-Feldeffekttransistoren (T1, T2) sind.

5. Fehlerstromschutzschalter (FI) nach einem der vorhergehenden Patentansprüche,
**dadurch gekennzeichnet,**
**dass** der zweite Anschluss des ersten Widerstandes (R1) und der Drain-Anschluss (D) des nicht mit dem ersten Widerstand (R1) verbundenen Transistors die Anschlüsse der Stromquelle (IQ) bilden.

6. Fehlerstromschutzschalter (FI) nach einem der vorhergehenden Patentansprüche,
**dadurch gekennzeichnet,**
**dass** der elektrische Stromkreis ein mehrphasiger Stromkreis ist,
**dass** der Prüfstromkreis einerseits mit einem der eingangsseitigen Leiter und andererseits mit einem anderen der ausgangsseitigen Leiter des Summenstromwandlers (SW) verbunden ist.

7. Fehlerstromschutzschalter (FI) nach Patentanspruch 6,
**dadurch gekennzeichnet,**
**dass** die Verbindung des Prüfstromkreises zu einem der eingangsseitigen Leiter oder einem der ausgangsseitigen Leiter des Summenstromwandlers (SW) umschaltbar ausgeführt ist.

## Claims

1. Residual current circuit breaker (FI) for an electrical circuit, having
a summation current transformer (SW) for ascertaining a differential current of the electrical circuit,
a breaker mechanism (M) comprising contacts for interrupting the electrical circuit,
a tripping circuit (A) that is connected to the summation current transformer (SW) and the breaker mechanism (M) and is configured in such a way that the breaker mechanism (M) is activated, and so the electrical circuit is interrupted, if a differential current limit value is exceeded,
a test circuit comprising a test key (T) for testing the functionality of the residual current circuit breaker (FI), wherein the test circuit has a current source (IQ), wherein the test circuit has a series connection comprising the test key (T) and the current source (IQ), which is firstly connected to an input-side conductor upstream of the summation current transformer (SW), and secondly is connected to another, output-side conductor downstream of the summation current transformer (SW), and wherein the current source (IQ) is a two-terminal network, **characterized in that** the current source (IQ) has a series connection comprising two transistors (T1, T2), wherein the drain terminal (D) of the first or second transistor (T1, T2) is connected to a first terminal of a first resistor (R1), and **in that** the source terminals (S) of the two transistors (T1, T2) are connected to one another via a second resistor (R2), wherein the gate terminal (G) of the first transistor (T1) is connected to the source terminal (S) of the second transistor (T2), and the gate terminal (G) of the second transistor (T2) is connected to the source terminal (S) of the first transistor (T1).

2. Residual current circuit breaker (FI) according to Patent Claim 1,
**characterized**
**in that**, when the test key (T) is pressed, an artificial residual current is generated, in the case of which the residual current circuit breaker has to trip.

3. Residual current circuit breaker (FI) according to either of the preceding patent claims,
**characterized**
**in that** the transistors are two depletion-type field-effect transistors (T1, T2).

4. Residual current circuit breaker (FI) according to Patent Claim 3,
**characterized**
**in that** the transistors are two metal-oxide-semiconductor field-effect transistors (T1, T2).

5. Residual current circuit breaker (FI) according to one of the preceding patent claims,
**characterized**
**in that** the second terminal of the first resistor (R1) and the drain terminal (D) of the transistor not connected to the first resistor (R1) form the terminals of the current source (IQ) .

6. Residual current circuit breaker (FI) according to one of the preceding patent claims, **characterized**
**in that** the electrical circuit is a polyphase circuit, and
**in that** the test circuit is firstly connected to one of the input-side conductors, and secondly is connected to another of the output-side conductors of the summation current transformer (SW).

7. Residual current circuit breaker (FI) according to Patent Claim 6,
**characterized**
**in that** the connection of the test circuit to one of the input-side conductors or one of the output-side conductors of the summation current transformer (SW) is designed to be able to be changed over.

## Revendications

1. Disjoncteur à courant de défaut (FI) pour un circuit électrique, comprenant
un transformateur de sommation de courant (SW) pour la détermination d'un courant différentiel du circuit électrique,
un verrou de commutation (M) avec des contacts pour l'interruption du circuit électrique,
un circuit de déclenchement (A), qui est relié avec le transformateur de sommation de courant (SW) et le verrou de commutation (M) et conçu de façon à ce que, lors d'un dépassement d'une valeur limite de courant différentiel, le verrou de commutation (M) soit activé de sorte que le circuit électrique soit interrompu,
un circuit de contrôle avec une touche de contrôle (T) pour le contrôle du fonctionnement du disjoncteur à courant de défaut (FI),
dans lequel le circuit de contrôle comprend une source de courant (IQ),
dans lequel le circuit de contrôle comprend un branchement en série de la touche de contrôle (T) et de la source de courant (IQ) qui est relié, d'une part, avec un conducteur côté entrée avant le transformateur de sommation de courant (SW) et d'autre part avec un autre conducteur côté sortie après le transformateur de sommation de courant (SW), et
dans lequel la source de courant (IQ) est un bipôle,
**caractérisé en ce que** la source de courant (IQ) comprend un branchement en série de deux transistors (T1, T2),
dans lequel la borne de drain (D) du premier ou deuxième transistor (T1, T2) est reliée avec une première borne d'une première résistance (R1), et
les bornes de source (S) des deux transistors (T1, T2) sont reliées entre elles par l'intermédiaire d'une deuxième résistance (R2), dans lequel la borne de grille (G) du premier transistor (T1) est reliée avec la borne de source (S) du deuxième transistor (T2) et la borne de grille (G) du deuxième transistor (T2) est reliée avec la borne de source (S) du premier transistor (T1).

2. Disjoncteur à courant de défaut (FI) selon la revendication 1,
**caractérisé en ce que**
lors de l'actionnement de la touche de contrôle (T), un courant d'erreur artificiel est généré, le disjoncteur à courant de défaut doit alors se déclencher.

3. Disjoncteur à courant de défaut (FI) selon l'une des revendications précédentes,
**caractérisé en ce que**
les transistors sont deux transistors à effet de champ (T1, T2) du type à appauvrissement.

4. Disjoncteur à courant de défaut (FI) selon la revendication 3,
**caractérisé en ce que**
les transistors sont deux transistors à effet de champ (T1, T2) à semi-conducteurs de type oxydes métalliques.

5. Disjoncteur à courant de défaut (FI) selon l'une des revendications précédentes,
**caractérisé en ce que**
la deuxième borne de la première résistance (R1) et la borne de drain (D) du transistor non relié avec la première résistance constituent les bornes de la source de courant (IQ).

6. Disjoncteur à courant de défaut (FI) selon l'une des revendications précédentes,
**caractérisé en ce que**
le circuit électrique est un circuit multiphasé,
le circuit de contrôle est relié d'une part avec un des conducteurs côté entrée et d'autre part avec un autre des conducteurs côté sortie du transformateur de sommation de courant (SW).

7. Disjoncteur à courant de défaut (FI) selon la revendication 6,
**caractérisé en ce que**
la liaison entre le circuit de contrôle et un des conducteurs côté entrée ou un des conducteurs côté sortie du transformateur de sommation de courant (SW) est réalisée de façon à être commutable.
